# EUROPÄISCHE PATENTSCHRIFT

(11) **EP 1 356 530 B1**
(45) Veröffentlichungstag und Bekanntmachung des Hinweises auf die Patenterteilung: **02.01.2008**
(21) Anmeldenummer: 02708185.0
(22) Anmeldetag: 30.01.2002
(51) Int. Cl.: H01L 41/113

(54) **VORRICHTUNG ZUR ENERGIEVERSORGUNG EINES SENSORS**
DEVICE FOR SUPPLYING A SENSOR WITH POWER
DISPOSITIF D'ALIMENTATION EN ENERGIE D'UN DETECTEUR

(30) Priorität: 30.01.2001 DE 10103952
(43) Veröffentlichungstag der Anmeldung: 29.10.2003
(73) Patentinhaber: EnOcean GmbH, 82041 Oberhaching (DE)
(72) Erfinder: PISTOR, Klaus, 83623 Linden (DE)
(74) Vertreter: Epping - Hermann - Fischer
(86) Internationale Anmeldenummer: PCT/DE2002/000321
(87) Internationale Veröffentlichungsnummer: WO 2002/061857

(56) Entgegenhaltungen:
- DE-U- 29 622 369
- US-A- 3 862 402
- US-A- 3 976 899
- US-A- 4 868 566

## Beschreibung

Die Erfindung betrifft eine Vorrichtung zur Energieversorgung, eines Sensors, nach dem Oberbegriff des Patentanspruches 1.

Eine derartige Vorrichtung ist aus der WO 98/36395 bekannt. Die bekannte Vorrichtung beschreibt einen prozessenergienutzenden drahtlosen Schalter mit Funksignalen, welcher einen piezoelektrischen Wandler aufweist, der mit Fingerdruck beaufschlagbar ist und eine Piezospannung erzeugt. Dem vom Schalter erzeugten Hochfrequenzsignal kann eine der Umgebungstemperatur entsprechende Codierung aufgeprägt sein. Ferner kann zur Erzeugung einer hohen Piezospannung eine mechanische Betätigungsvorrichtung mit Übertotpunkt-Feder verwendet werden, die bei einer Belastung über den Totpunkt hinaus, schlagartig mit der eingestellten mechanischen Vorspannung auf den Wandler einwirkt.

Aus der US 4,868,566 ist die Energieversorgung eines Sensors mit einem piezoelektrischen Wandler bekannt, wobei dieser piezoelektrische Wandler auf einem federnden Trägerelement aufgebracht ist. Ein Nockenrad deformiert das Trägerelement. Durch die Deformation erzeugt der piezoelektrische Wandler elektrische Energie, die der Versorgung des Sensors dient.

Aufgabe der Erfindung ist es, eine Vorrichtung der eingangs genannten Art zu schaffen, welche mit einfachen Mitteln zur Verfügung stehende Prozessenergie in, insbesondere für den Betrieb eines Sensors geeignete, elektrische Energie wandelt.

Diese Aufgabe wird durch die Merkmale des Patentanspruchs 1 gelöst. Vorteilhafte Ausgestaltungen sind den Unteransprüchen entnehmbar.

Bei der Erfindung kommt ein piezoelektrischer Wandler zum Einsatz, welcher durch die vom Energiespeicher abgegebene mechanische Energie in Form von Deformationsarbeit biegbar ist. Durch die Verformung des piezoelektrischen Wandlers erfolgt im piezoelektrischen Stoff eine Verschiebung der positiven und negativen Ladungsschwerpunkte, die als elektrische Spannung zum Betrieb des Sensors verwendet wird.

Der piezoelektrische Wandler ist passiv ausgebildet, erzeugt also selbst keine wesentliche Deformationsarbeit zur Betätigung der Vorrichtung sondern dient vornehmlich der elektromechanischen Energieumwandlung. Typischerweise wird dabei von aussen Energie in den Energiespeicher eingeleitet, z. B. durch mechanische Betätigung auf den Energiespeicher, und an einem anderen Punkt des Energiespeichers an den Wandler abgegeben.

Auf diese Weise erreicht man einen energieautarken Sensor, der die für seinen Betrieb, d.h. für die Durchführung von Messungen und für die Übertragung der Messgrößen, erforderliche Energie aus vorhandener Prozessenergie gewinnt. Die Prozessenergie kann beispielsweise die bei der Betätigung eines mit dem mechanischen Energiespeicher gekoppelten Schalters aufgewendete mechanische Energie sein, welche durch den piezoelektrische Wandler in elektrische Energie gewandelt wird.

Der Wandler ist vorzugsweise als Biegewandler ausgebildet, wobei ein Stabende des Wandlers gegenüber einem anderen festgehaltenen Stabende biegbar ist. Vorzugsweise kann das biegbare Stabende des Wandlers in zwei entgegengesetzten Richtungen gebogen werden. Insbesondere günstig ist die Ausbildung des Biegewandlers als stabförmig.

Der Wandler kann aus mehreren piezoelektrischen Teilelementen, die in Reihe oder parallel geschaltet sind, bestehen. Die Anordnung der Kristallstruktur des piezoelektrischen Stoffes erfolgt so, dass bei der Verbiegung des Wandlers eine möglichst große Ladungstrennung, d.h. Verschiebung der positiven und negativen Ladungsschwerpunkte im piezoelektrischen Stoff erfolgt. Vorzugsweise ist der Wandler zwischen zwei Endstellungen biegbar.

Der zur Speicherung der Prozessenergie dienende Energiespeicher kann so ausgebildet sein, dass er bei Überschreiten der Speicherkapazität die gespeicherte Energie in Form der Verformungsarbeit an den Wandler abgibt. Die Speicherkapazität des Energiespeichers kann als Schaltpunkt definiert sein, wenn beispielsweise ein angeschlossener Sensor als Schalter oder Schaltelement, insbesondere als batterieloser Funkfernschalter, verwendet wird.

Der Energiespeicher ist als mechanischer Energiespeicher, beispielsweise als mechanische oder pneumatische Feder ausgebildet. Die Speicherkapazität dieser Feder ist vorzugsweise durch einen Totpunkt vorgegeben. Bei Überschreiten dieses Totpunktes erfolgt das Auslösen und Übertragen der gespeicherten Prozessenergie als Deformationsarbeit auf den Energiewandler.

Während des Einwirkens der Prozessenergie auf den Energiespeicher wird diese Energie zwischengespeichert, ohne dass Verformungsarbeit am Wandler geleistet wird. Die Speicherung erfolgt solange, bis die Speicherkapazität erreicht wird. Die gespeicherte Energie wird dann bei Überschreiten der Speicherkapazität, z. B. des Totpunktes der Feder kurzzeitig zum Biegen des Wandlers abgegeben. Die Verbiegung des Wandlers hängt daher nicht vom Verlauf und von der Einwirkung der Prozessenergie ab. Die Deformationsarbeit am Wandler wird vielmehr zu einem definierten Zeitpunkt bzw. Schaltpunkt am Wandler geleistet. Die Prozessenergie kann auch als Gewichtskraft zwischengespeichert werden.

Die Betätigung des Energiespeichers ist nicht eingeschränkt; so kann er direkt manuell, über eine mechanische Koppelvorrichtung oder über andere bewegbare Elemente wie thermomechanische Elemente geschaltet werden. Auch kann er über eine andere als eine mechanische Kopplung deformiert werden, z. B. mittels einer elektromechanischen, magnetischen, elektrostatischen, magneto- oder elektrostriktiven Kopplung.

Anhand der Figuren wird an einem Ausführungsbeispiel die Erfindung noch näher erläutert.

Es zeigt
- Fig. 1: schematisch den Aufbau eines Ausführungsbeispiels der Erfindung;
- Fig. 2: verschiedene Betriebsstellungen des Ausführungsbeispiels; und
- Fig. 3: ein Fliessdiagramm zur Erläuterung des Betriebs des Ausführungsbeispiels.

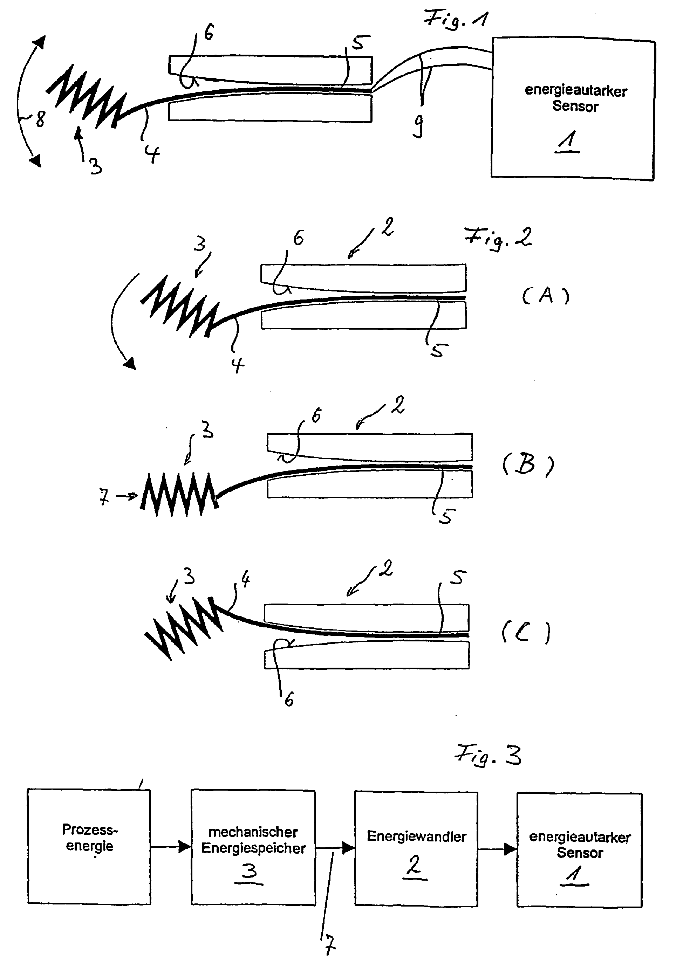

Das in Figur 1 dargestellte Ausführungsbeispiel zeigt schematisch einen Sensor 1, welcher Messgrößen beispielsweise Temperatur, Druck und dergleichen erfassen kann und diese Messgrößen an eine nicht näher dargestellte Auswerteeinrichtung, beispielsweise durch Funk weiterleitet. Der Sensor 1 kann auch als Schalter, insbesondere batterieloser Funkfernschalter ausgebildet sein.

Zur Energieversorgung des Sensors 1 wird zur Verfügung stehende Prozessenergie in elektrische Energie, insbesondere elektrische Spannung gewandelt, welche zum Betrieb des Sensors verwendet wird. Hierzu ist ein piezoelektrischer Wandler 2 in Stabform oder ähnlicher langgestreckter Form z. B. Plättchenform vorgesehen. Der piezoelektrischer Wandler 2 ist an seinem einen Stabende 5 fest eingespannt und an seinem anderen Stabende 4 biegbar ausgebildet. Der Wandler (Biegewandler) kann aus mehreren piezoelektrischen Teilelementen bestehen, die in Reihe oder parallel geschaltet sind. Beim Verbiegen des Wandlers 2 werden positive und negative Ladungsschwerpunkte aufgrund des piezoelektrischen Effektes im piezoelektrischen Stoff verschoben. Am Wandler 2 wird hierdurch eine elektrische Spannung (Piezospannung) erzeugt, welche zum Betrieb des Sensors 1 verwendet wird.

Der Wandler 2 ist so ausgebildet, dass er zwischen zwei Endstellungen die durch einander gegenüber liegende Anlagenflächen 6 definiert sind, hin und her gebogen werden kann. Durch die Anlageflächen 6 lässt sich ein optimaler Biegeverlauf erreichen. Die Anlageflächen 6 können an der Vorrichtung, welche zum Festhalten des einen Stabendes 5 dienen, vorgesehen sein.

Der Energiespeicher 3, welcher zur Zwischenspeicherung der Prozessenergie dient, ist vorzugsweise so ausgebildet, dass er eine bestimmte Speicherkapazität aufweist. Bei Überschreiten dieser Speicherkapazität wird die gespeicherte Prozessenergie in Form von Deformationsarbeit an den Wandler 2 abgegeben, so dass dieser gebogen wird. Beim dargestellten Ausführungsbeispiel wird hierzu eine mechanische Feder verwendet, die einen Totpunkt 7 (Figur 2B) aufweist. Der mechanische Totpunkt 7 definiert die Speicherkapazität des als Feder ausgebildeten Energiespeichers 3. Die auf die Feder einwirkende Prozessenergie, beispielsweise die zur Betätigung eines Schalters aufgewendete mechanische Energie wird gespeichert, wodurch die Feder zunehmend gespannt wird. Dieser Betriebszustand ist in der Figur 2 (A) dargestellt. Das biegbare Stabende 4 verbleibt bis zum Erreichen des mechanischen Totpunktes 7 der Feder in seiner stabilen Endstellung, die in den Figuren 2 (A) und (B) dargestellt ist. Beim Überschreiten des mechanischen Totpunktes 7, d. h. beim Überschreiten der Speicherkapazität, wird die in der Feder gespeicherte Kraft kurzzeitig als Verformungsarbeit an den Wandler 2 abgegeben, wodurch dessen biegbares Stabende 4 in die andere, in der Figur 2 (C) dargestellte oben liegende Endstellung gebogen wird. Die beiden Endstellungen für den Biegewandler werden beim dargestellten Ausführungsbeispiel durch die Anlageflächen 6 bestimmt. Durch den in Figur 1 gezeigten Doppelpfeil 8 sind die Betätigungsrichtungen der auf die Feder (Energiespeicher 3) einwirkenden Prozessenergie dargestellt. Demgemäß kann das biegbare Stabende 4 des piezoelektrischen Wandlers 2 zwischen den beiden Endstellungen hin und her bewegt werden. Das biegbare Stabende 4 verbleibt dabei solange in seiner jeweiligen Ausgangsposition, bis der Totpunkt 7, d. h. die Speicherkapazität der den Energiespeicher 3 bildenden Feder überschritten wird und die gespeicherte Energie als Deformationsarbeit auf das in die andere Endstellung umgebogene Stabende 4 übertragen wird.

Man erreicht hierdurch eine aus vorhandener Prozessenergie gewonnene Energieversorgung für einen dadurch energieautark gemachten Sensor 1 mit relativ hohem Wirkungsgrad. Für die Anordnung des piezoelektrischen Wandlers 2 und des Energiespeichers 3 lässt sich ein kompakter Aufbau erzielen. Bei Verwendung einer Feder als Energiespeicher 3 erzielt man durch die Totpunktlage der Feder einen mechanisch in einfacher Weise definierten Schaltpunkt für die Erzeugung der zum Betrieb des Sensors erforderlichen elektrischen Energie.

Wie aus der Figur 3 zu ersehen ist, wird beim dargestellten Ausführungsbeispiel die Prozessenergie in einem insbesondere mechanischen Energiespeicher soweit gespeichert, bis die Speicherkapazität des Energiespeichers 3 erreicht wird. Bei Verwendung einer mechanischen Feder kann diese Speicherkapazität durch den Totpunkt 7 definiert werden. Bei Überschreitung der Speicherkapazität bzw. des Totpunktes 7 wird zur Verbiegung des piezoelektrischen Wandlers Deformationsarbeit aus dem Energiespeicher frei gegeben. Durch die sich daraus im piezoelektrischen Stoff ergebende Verschiebung der positiven und negativen Ladungsschwerpunkte entsteht eine elektrische Energiequelle für den Betrieb des auf diese Weise energieautark gemachten Sensors 1. Der Sensor 1 ist über einen elektrischen Anschluss 9 mit dem Wandler 2 verbunden. Die Speicherkapazität bzw. der Totpunkt 7 kann dabei als definierter Schaltpunkt oder Schaltzeit wirken. Eine bevorzugte Anwendung findet die Vorrichtung bei einem batterielosen Funkfernschalter.

## Patentansprüche

1. Vorrichtung zur Energieversorgung eines Sensors (1) mit einem piezoelektrischen Wandler (2), welcher durch einen mechanischen Energiespeicher (3) deformierbar ist und eine entsprechende elektrische Spannung zum Betrieb des Sensors (1) liefert,
**dadurch gekennzeichnet, dass** der piezoelektrische Wandler (2) durch die vom Energiespeicher (3) abgegebene Deformationsarbeit und in der jeweiligen Biegerichtung (8) entlang einer jeweiligen Anlagefläche (6) biegbar ist.

2. Vorrichtung nach Anspruch 1,
**dadurch gekennzeichnet, dass** der Wandler (2) stabförmig ausgebildet ist und sein eines Stabende (4) gegenüber dem anderen fest gehaltenen Stabende (5), insbesondere in zwei entgegengesetzten Richtungen biegbar ist.

3. Vorrichtung nach Anspruch 1 oder 2,
**dadurch gekennzeichnet, dass** der Wandler (2) aus mehreren piezoelektrischen Teilelementen besteht, die in Reihe oder parallel geschaltet sind.

4. Vorrichtung nach einem der Ansprüche 1 bis 3,
**dadurch gekennzeichnet, dass** im Energiespeicher (3) vorhandene Prozessenergie gespeichert ist.

5. Vorrichtung nach einem der Ansprüche 1 bis 4,
**dadurch gekennzeichnet, dass** bei Überschreiten der Speicherkapazität des Energiespeichers (3) die gespeicherte Energie als Verformungsarbeit an den Wandler (2) abgebbar ist.

6. Vorrichtung nach Anspruch 5,
**dadurch gekennzeichnet, dass** die Speicherkapazität des Energiespeichers (3) einen Schaltpunkt definiert.

7. Vorrichtung nach einem der Ansprüche 1 bis 6,
**dadurch gekennzeichnet, dass** die Verformungsarbeit vom Energiespeicher kurzzeitig auf den Wandler (2) übertragbar ist.

8. Vorrichtung nach einem der Ansprüche 1 bis 7,
**dadurch gekennzeichnet, dass** der Energiespeicher (3) als Feder ausgebildet ist.

9. Vorrichtung nach Anspruch 8,
**dadurch gekennzeichnet, dass** die Feder einen Totpunkt (7) aufweist.

10. Vorrichtung nach Anspruch 9,
**dadurch gekennzeichnet, dass** die beiden Endstellungen des Wandlers (2) zu beiden Seiten des Totpunktes (7) liegen.

## Claims

1. Apparatus for supplying power to a sensor (1), having a piezoelectric transducer (2) which can be deformed by a mechanical energy store (3) and supplies a corresponding electrical voltage for operation of the sensor,
**characterized in that**
the passive piezoelectric transducer (2) can be bent by means of deformation work which is emitted from the energy store (3) and can be bent in the respective bending direction (8) along a respective contact surface (6).

2. Apparatus according to Claim 1,
**characterized in that** the transducer (2) is in the form of a rod and one of its rod ends (4) can be bent, in particular in two opposite directions, with respect to another rod end (5) which is held fixed.

3. Apparatus according to Claim 1 or 2,
**characterized in that** the transducer (2) is formed from two or more piezoelectric partial elements, which are connected in series or in parallel.

4. Apparatus according to one of Claims 1 to 3,
**characterized in that** process energy which is available is stored in the energy store (3).

5. Apparatus according to one of Claims 1 to 4,
**characterized in that**, if the storage capacity of the energy store (3) is exceeded, the stored energy can be emitted as deformation work to the transducer (2).

6. Apparatus according to Claim 5,
**characterized in that** the storage capacity of the energy store (3) defines a switching point.

7. Apparatus according to one of Claims 1 to 6,
**characterized in that** the deformation work can be transferred from the energy store to the transducer (2) in a short time.

8. Apparatus according to one of Claims 1 to 7,
**characterized in that** the energy store (3) is in the form of a spring.

9. Apparatus according to Claim 8,
**characterized in that** the spring has a dead point (7).

10. Apparatus according to Claim 9,
**characterized in that** the two end positions of the transducer (2) are located on both sides of the dead point (7).

## Revendications

1. Dispositif d'alimentation en énergie d'un détecteur (1) ayant un transducteur (2) piézoélectrique qui peut être déformé par un accumulateur (3) d'énergie mécanique et qui fournit une tension électrique correspondante pour faire fonctionner le détecteur (1), **caractérisé en ce que** le transducteur (2) piézoélectrique peut être courbé le long d'une surface (6) d'appui respective par le travail de déformation cédé par l'accumulateur (3) d'énergie et dans la direction (8) de courbure respective.

2. Dispositif suivant la revendication 1, **caractérisé en ce que** le transducteur (2) est constitué sous la forme d'une barre et l'une de ses extrémités (4) peut être courbée par rapport à l'autre extrémité (5) maintenue fixe, notamment dans deux directions opposées.

3. Dispositif suivant la revendication 1 ou 2, **caractérisé en ce que** le transducteur (2) est constitué de plusieurs sous éléments piézoélectriques qui sont montés en série ou en parallèle.

4. Dispositif suivant l'une des revendications 1 à 3, **caractérisé en ce que** de l'énergie de processus présente dans l'accumulateur (3) d'énergie est accumulée.

5. Dispositif suivant l'une des revendications 1 à 4, **caractérisé en ce que**, si la capacité d'accumulation de l'accumulateur (3) d'énergie est dépassée, l'énergie accumulée est cédée au transducteur (2) sous forme de travail de déformation.

6. Dispositif suivant la revendication 5, **caractérisé en ce que** la capacité de l'accumulateur (3) d'énergie définit un point de commutation.

7. Dispositif suivant l'une des revendications 1 à 6, **caractérisé en ce que** le travail de déformation de l'accumulateur d'énergie peut être transmis temporairement au transducteur (2).

8. Dispositif suivant l'une des revendications 1 à 7, **caractérisé en ce que** l'accumulateur (3) d'énergie est constitué sous la forme d'un ressort.

9. Dispositif suivant la revendication 8, **caractérisé en ce que** le ressort a un point (7) mort.

10. Dispositif suivant la revendication 9, **caractérisé en ce que** les deux positions d'extrémité du transducteur (2) se trouvent de part et d'autre du point (7) mort.
